# FASCICULE DE BREVET EUROPEEN

(11) **EP 0 660 483 B1**
(45) Date de publication et mention de la délivrance du brevet: **04.06.1997**
(21) Numéro de dépôt: 94402959.4
(22) Date de dépôt: 20.12.1994
(51) Int. Cl.: H02G 15/184, H02G 15/103

(54) **Dispositif pour la jonction de câbles d'énergie**
Vorrichtung zum Verbinden von Energiekabeln
Device for joining power cables

(30) Priorité: 23.12.1993 FR 9315557
(43) Date de publication de la demande: 28.06.1995
(73) Titulaire: EUROMOLD, B-1060 Bruxelles (BE)
(72) Inventeur: Mirebeau, Pierre, F-91140 Villebon S/Yvette (FR); Galaj, Stanislas, F-94110 Arcueil (FR); Prigent, Madeleine, F-91460 Marcoussis (FR)
(74) Mandataire: Laroche, Danièle

(56) Documents cités:
- EP-A- 0 507 676
- EP-A- 0 539 905
- EP-A- 0 549 942
- GB-A- 2 111 769
- US-A- 4 822 952

## Description

La présente invention concerne un dispositif destiné à être mis en oeuvre dans la jonction de câbles d'énergie fonctionnant à moyenne ou haute tension supérieure ou égale à 1,8/3 (3,6kV), et de préférence, mais non exclusivement, pour le transport de courant alternatif.

Actuellement le raccordement de deux câbles s'effectue à l'aide d'une jonction préfabriquée, réalisée par injection ou par extrusion, qui reconstitue un système d'isolation autour des âmes des câbles raccordées entre elles. Le dispositif de jonction comporte une couche électriquement isolante placée entre deux couches conductrices assurant la répartition régulière du champ électrique. Les deux couches encadrant la couche isolante sont composées soit d'un matériau généralement à base d'un semi-conducteur polymère chargé par un noir de carbone conducteur, le plus souvent l'EPDM (terpolymère d'éthylène-propylène-diène à chaîne principale méthylène). Le document GB-A-2 111 769 donne des exemples de telles jonctions.

L'intensité du champ électrique peut atteindre au voisinage des interfaces entre les couches plusieurs fois l'intensité du champ nominal, de telle sorte que la tension de claquage peut être rapidement atteinte et on observe alors la perforation de la couche isolante.

Une telle jonction présente des propriétés diélectriques insuffisantes par rapport à son utilisation, ce qui d'une part provoque le claquage de la jonction qui peut générer des perturbations dans la distribution d'électricité dans le réseau, et qui d'autre part entraine un manque de fiabilité de leur fabrication à l'origine de nombreux déchets.

La présente invention propose un dispositif pour la jonction de câbles d'énergie fonctionnant à moyenne ou haute tension dont les propriétés diélectriques sont améliorées par rapport aux dispositifs de jonctions connues.

L'invention a en outre pour but de proposer un dispositif pour la jonction de câbles d'énergie fonctionnant à moyenne ou haute tension dont la réalisation et la mise en oeuvre puissent être effectuées avec une fiabilité accrue.

L'objet de la présente invention est un dispositif pour la jonction de câbles d'énergie à moyenne et haute tension comportant coaxialement au moins une première couche entourée extérieurement par une deuxième couche électriquement isolante en élastomère. La première couche est constituée du mélange d'une matrice polymère et d'une charge qui est un polymère comportant au niveau des motifs monomères des fonctions susceptibles d'assurer la répartition homogène du champ électrique. La charge est un polymère à groupements polaires pendants de constante diélectrique relative εᵣ supérieure ou égale à 10, dont la proportion est choisie de telle sorte que la constante diélectrique relative εᵣ dudit mélange soit supérieure ou égale à 6. La deuxième couche est constituée par un élastomère thermoplastique. La première couche et la deuxième couche sont étroitement associées avec une adhérence supérieure ou égale à 5N.cm⁻¹.

Le renforcement du champ électrique se produit essentiellement à l'interface entre deux couches. La présence de quelques hétérogénéités au niveau de cet interface suffit à provoquer l'accumulation de charges d'espace et un renforcement local du champ électrique qui peut être très important et provoquer le claquage de la jonction. Il est donc primordial que la première couche et la deuxième couche présentent un interface le plus régulier possible et une adhérence élevée entre elles.

Ladite charge est un polymère choisi de préférence parmi le caoutchouc nitrile qui est un copolymère du butadiène et de l'acrylonitrile, le caoutchouc nitrile hydrogéné (HNBR), le polyéthylène chloré, le polyéthylène chlorosulfoné, et les mélanges comportant plus de 25% en poids de ces polymères.

On pourrait tout aussi bien utiliser des polyuréthannes, ou le polychloroprène (PCP) mais leur emploi est rendu difficile en raison de leur toxicité. On pourrait également utiliser le polyfluorure de vinylidène(PVDF) mais alors une bonne adhérence est difficile à obtenir.

La présence des groupements polaires pendants qui s'orientent en fonction de la direction du champ électrique contribue à sa meilleure répartition dans le volume de la première couche.

La matrice est choisie parmi un copolymère de l'éthylène, le polyéthylène linéaire très basse densité (VLDPE), et leurs mélanges.

Lorsque la matrice est un copolymère de l'éthylène, il est de préférence amorphe et choisi parmi le terpolymère d'éthylène-propylène-diène à chaîne principale méthylène (EPDM), le copolymère d'éthylène-propylène à chaîne principale méthylène (EPM), le copolymère d'éthylène et d'acétate de vinyl (EVA) contenant au moins 26% d'acétate de vinyl, le copolymère d'éthylène et de butylacrylate (EBA), le copolymère d'éthylène et d'acrylate de méthyle (EMA), et leurs mélanges.

La matrice confère au mélange ses propriétés mécaniques et contribue à la qualité de l'adhésion entre la première et la deuxième couche.

De préférence, la deuxième couche est constituée par un élastomère thermoplastique polyphasique qui est un mélange de polymères à base oléfinique réalisé par réticulation dynamique dans un appareillage comportant une vis.

Selon un premier mode de réalisation, la deuxième couche est constituée par un élastomère thermoplastique polyphasique choisi parmi les mélanges du terpolymère d'éthylène-propylène-diène à chaîne principale méthylène (EPDM) avec le polytéréphtalate d'éthylène (PET), le polyamide (PA), le polycarbonate (PC), et le polypropylène (PP).

Selon un second mode de réalisation, la deuxième couche est constituée par un élastomère thermoplastique polyphasique choisi parmi les mélanges du polyéthylène linéaire très basse densité (VLDPE) avec le polytéréphtalate d'éthylène (PET), le polyamide (PA), le polycarbonate (PC), et le polypropylène (PP).

Les élastomères thermoplastiques sont connus pour leur facilité de mise en forme améliorant la productivité. Ils présentent d'une manière générale une phase organique dispersée dans une phase organique continue. Cette structure polyphasique fait apparaître une grande mobilité électrique interfaciale qui permet d'éviter l'apparition de charges d'espaces et donc de limiter à l'interface une éventuelle amplification du champ électrique.

Une couche en élastomère thermoplastique destinée à l'isolation d'un câble à haute tension (plus de 60kV) en courant continu, et placée entre l'âme du câble et un écran métallique, a été décrite dans la demande de brevet européen EP-A-539 905.

Selon encore un autre mode de réalisation préférentiel, la deuxième couche est constituée par un élastomère réticulé choisi parmi le terpolymère d'éthylène-propylène-diène à chaîne principale méthylène (EPDM), le copolymère d'éthylène-propylène à chaîne principale méthylène (EPM ou EPR), et le polyéthylène linéaire très basse densité (VLDPE), leurs alliages et leurs mélanges.

D'autres caractéristiques et avantages de la présente invention apparaitront à la lecture des exemples suivants donnés bien entendu à titre illustratif et non limitatif, et dans le dessin annexé sur lequel:
- la figure 1 représente un dispositif de jonction réalisé par injection selon l'invention,
- la figure 2 montre un dispositif de jonction réalisé par extrusion selon l'invention,
- la figure 3 est une coupe schématique d'un échantillon utilisé pour le test de résistance au claquage,
- la figure 4 est un schéma de l'installation utilisée pour le test de résistance au claquage,
- la figure 5 représente schématiquement la vue de dessus d'un échantillon utilisé pour le test de renforcement du champ électrique,
- la figure 6 est une coupe schématique de l'échantillon de la figure 5,
- la figure 7 est un schéma de l'installation utilisée pour le test de renforçement du champ électrique.

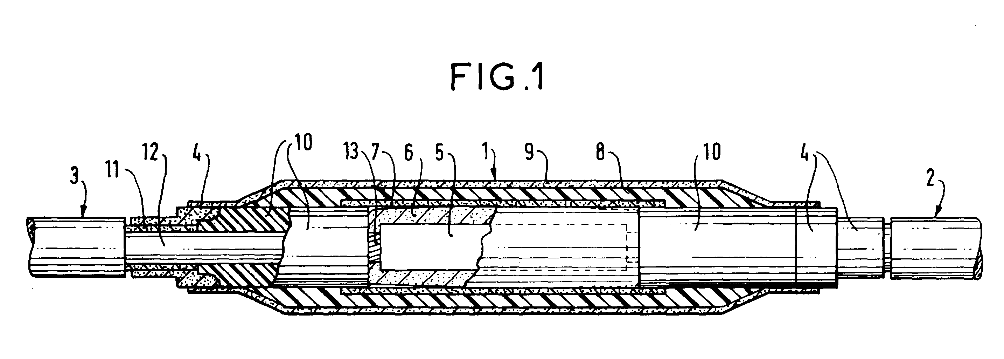

La figure 1 représente un dispositif 1 selon l'invention, mis en forme par injection, permettant de réaliser la jonction entre un premier câble 2 et un second câble 3. Le câble 3 de diamètre extérieur inférieur à l'extrémité du dispositif 1 est muni d'une pièce d'adaptation 10 munie d'un déflecteur 4. Les âmes conductrices 13 des câbles 2 et 3 sont reliées par une pièce de connexion 5 qui est entourée par un dissipateur thermique 6. Le dispositif 1 selon l'invention se compose d'une première couche 7 d'environ 0,6mm d'épaisseur constituée du mélange d'une matrice polymère et d'une charge qui est un polymère comportant au niveau des motifs monomères des fonctions susceptibles d'assurer une répartition homogène du champ électrique, à laquelle adhère une deuxième couche 8 d'environ 5,5mm constituée d'un élastomère thermoplastique polyphasique, et d'une couche externe 9 semi-conductrice d'environ 0,6mm constituée conformément à l'état de l'art d'un matériau à base d'EPDM contenant une charge de noir de carbone conducteur. Chacune de ces couches est reliée respectivement à la couche correspondante des câbles. Lorsqu'on réalise une jonction, le câble est dénudé pour faire apparaître une couche semi-conductrice 11 mise à la masse et destinée à assurer le blindage du câble, qui est reliée à la couche externe 9 du dispositif 1 de jonction par l'intermédiaire du déflecteur 4. Puis se trouve une couche électriquement isolante 12 qui est reliée à la deuxième couche 8 selon l'invention par l'intermédiaire de la pièce d'adaptation 10. Enfin une couche semi-conductrice recouvre l'âme 13 du câble pour former une chambre équipotentielle, et est reliée à la première couche 7 selon l'invention par l'intermédiaire du dissipateur thermique 6.

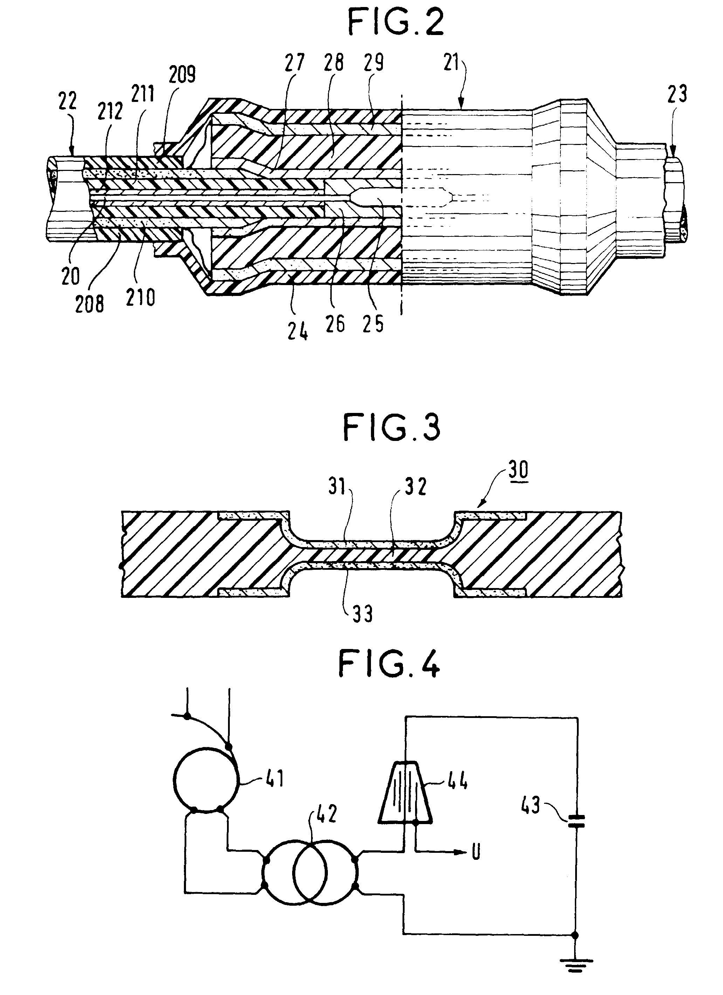

La figure 2 représente un dispositif 21 selon l'invention, mis en forme par extrusion, permettant de réaliser la jonction entre un premier câble 22 et un second câble 23. Les âmes conductrices 20 dénudées des câbles 22 et 23 sont reliées par une pièce de connexion 25 qui est entourée par un dissipateur thermique 26 semi-conducteur constitué du même matériau que la première couche 27. Le dispositif 21 selon l'invention se compose d'une première couche 27 constituée d'une matrice polymère chargée par un polymère comportant au niveau des motifs monomères des fonctions susceptibles d'assurer une répartition homogène du champ électrique, à laquelle adhère une deuxième couche 28 constituée d'un élastomère thermoplastique polyphasique, et d'une couche externe 29 semi-conductrice constituée conformément à l'état de l'art. Chacune de ces couches est reliée respectivement à la couche correspondante des câbles. Lorsqu'on réalise une jonction, le câble est dénudé pour faire apparaître une couche semi-conductrice 210 mise à la masse et destinée à assurer le blindage du câble, qui est reliée à la couche externe 29 du dispositif 21 de jonction. Puis se trouve une couche électriquement isolante 211 qui est reliée à la deuxième couche 28 selon l'invention. Enfin une couche semi-conductrice 212 recouvre l'âme 20 du câble pour former une chambre équipotentielle, et est reliée par l'intermédiaire du dissipateur thermique 26 à la première couche 27 selon l'invention. Une gaine protectrice 24 recouvre la jonction et prolonge la gaine protectrice 208 du câble.

### EXEMPLE 1

On réalise un dispositif de jonction A selon l'art antérieur comportant une première couche semi-conductrice d'épaisseur 0,6mm composée du mélange d'une matrice d'EPDM (εᵣ=2,5) dans laquelle est ajouté 60 parties en poids d'un noir de carbone conducteur type "noir au four". Ce mélange a une résistivité électrique de 80Ω.cm à 50Hz, une valeur de l'allongement à la rupture à température ambiante de 600%, et une résistance à la traction de 10MPa.

Sur cette première couche est disposée une deuxième couche isolante de 5,5mm d'épaisseur constituée par de l'EPDM.

La couche externe semi-conductrice est de composition identique à celle de la première couche.

### EXEMPLE 2

On réalise un dispositif de jonction B selon l'art antérieur comportant une première couche semi-conductrice d'épaisseur 0,6mm composée du mélange d'une matrice élastomère EPDM dans laquelle est ajouté 30 parties en poids d'un noir de carbone conducteur type "KETJEN". Ce mélange a une constante diélectrique relative εᵣ de 8 à 50Hz, une valeur de l'allongement à la rupture à température ambiante de 550%, et une résistance à la traction de 14MPa.

Sur cette première couche est disposée une deuxième couche isolante de 5,5mm d'épaisseur constituée par de l'EPDM.

La couche externe semi-conductrice est de composition identique à celle de l'exemple 1.

### EXEMPLE 3

On réalise un dispositif de jonction C selon l'invention comportant une première couche semi-conductrice d'épaisseur 0,6mm composée du mélange homogène de 50 parties en poids d'une matrice de copolymère de l'éthylène EVA à 45% en poids d'acétate de vinyl (εᵣ=2,5) de référence "LEVAPRENE 450" de la société BAYER, de 50 parties en poids de caoutchouc nitrile hydrogéné HNBR (εᵣ=40) de référence "TORNAC 3855" de la société BAYER, de 3 parties en poids d'un agent de réticulation qui est du peroxyde de dicumyle de référence "PERKADOX BC 40", et de 1,5 partie en poids d'un antioxydant qui est la poly-1,2-dihydro-2,2,4-triméthyl quinoléine. Ce mélange a une constante diélectrique relative εᵣ de 11 à 50Hz, une valeur de l'allongement à la rupture à température ambiante de 450%, et une résistance à la traction de 5MPa.

Sur cette première couche est disposée une deuxième couche isolante de 5,5mm d'épaisseur constituée par de l'EPDM. L'adhérence entre les deux couches est de 10daN.cm⁻¹.

La couche externe semi-conductrice est de composition identique à celle de l'exemple 1.

### EXEMPLE 4

On réalise un dispositif de jonction E selon l'invention comportant une première couche semi-conductrice d'épaisseur 0,6mm composée du mélange homogène de 50 parties en poids d'une matrice de copolymère de l'éthylène EVA à 45% en poids d'acétate de vinyl (εᵣ=2,5) de référence "LEVAPRENE 450" de la société BAYER, de 50 parties en poids de caoutchouc nitrile hydrogéné HNBR (εᵣ=40) de référence "TORNAC 3855" de la société BAYER, de 3 parties en poids d'un agent de réticulation qui est du peroxyde de dicumyle de référence "PERKADOX BC 40", et de 1,5 partie en poids d'un antioxydant qui est la poly-1,2-dihydro-2,2,4-triméthyl quinoléine. Ce mélange a une constante diélectrique relative εᵣ de 11 à 50Hz, une valeur de l'allongement à la rupture à température ambiante de 450%, et une résistance à la traction de 5MPa.

Sur cette première couche est disposée une deuxième couche isolante de 5,5mm d'épaisseur constituée par un mélange de polymères comportant 70% en poids d'EPDM et 30% en poids de PC. L'adhérence entre les deux couches est de 10daN.cm⁻¹.

La couche externe semi-conductrice est de composition identique à celle de l'exemple 1.

### EXEMPLE 5

Un test de résistance au claquage est effectué sur des échantillons de 0,7mm d'épaisseur, dont la figure 3 représente une coupe, analogues aux dispositifs de jonctions A, B, C, E réalisés suivant les exemples 1 à 4. L'échantillon 30 est formé de l'empilement d'une première couche 31 à laquelle adhère une deuxième couche 32 selon la présente invention, et d'une troisième couche externe 33 composée du mélange d'une matrice d'EPDM et de 60 parties en poids d'un noir de carbone conducteur type "noir au four" conformément à l'état de l'art.

Le test est réalisé à l'aide d'une installation, représentée sur la figure 4, permettant de soumettre les échantillons à une rampe de tension alternative de fréquence 50Hz, générée par le diviseur de tension 41, qui est appliquée à l'entrée d'un transformateur 42 basse tension/haute tension. La haute tension correspondante U est directement appliquée au porte-échantillon 43 et mesurée aux bornes de la traversée capacitive 44. Le porte-échantillon 43 est constitué de deux électrodes en laiton, et plonge dans un bain d'huile silicone afin d'assurer un isolement suffisant et d'étudier les effets de la température.

On soumet ces échantillons à un accroissement de tension de 1kV/sec en courant alternatif. Les résultats sont exploités par la méthode statistique de WEIBULL qui donne les probabilités de claquage (en %) des échantillons A à E pour un champ de 30kV/mm. Ces valeurs sont rassemblées dans le tableau I ci-dessous:

**TABLEAU I**

| référence | A | B | C | E |
|---|---|---|---|---|
| probabilité de claquage (%) | 5 | 5 | 3 | 1 |

On constate que les plus faibles probabilités sont obtenues pour l'échantillon E selon la présente invention. Ce test montre l'avantage des dispositifs de jonction C et E selon la présente invention pour la tenue au claquage de la jonction sous l'effet d'une perturbation de courte durée.

### EXEMPLE 6

On réalise un dispositif de jonction B' selon l'art antérieur analogue au dispositif de jonction B décrit dans l'exemple 2, à l'exception de la couche externe qui est de composition identique à la première couche du dispositif de jonction B.

### EXEMPLE 7

On réalise un dispositif de jonction C' selon l'invention analogue au dispositif de jonction C décrit dans l'exemple 3, à l'exception de la couche externe qui est de composition identique à la première couche du dispositif de jonction C.

### EXEMPLE 8

On réalise un dispositif de jonction E' selon l'invention analogue au dispositif de jonction E décrit dans l'exemple 5, à l'exception de la couche externe qui est de composition identique à la première couche du dispositif de jonction E.

### EXEMPLE 9

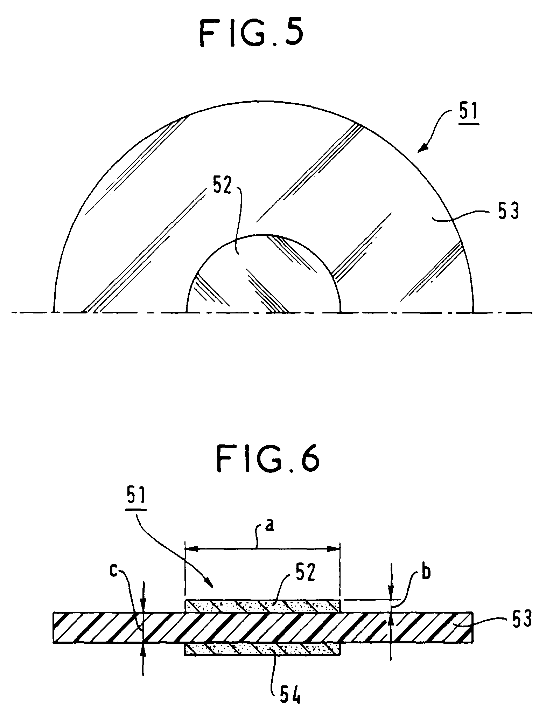

Un test de renforcement du champ électrique est effectué sur des échantillons de 2mm d'épaisseur, dont la figure 5 représente une vue de dessus et la figure 6 une coupe, analogues aux dispositifs de jonction A, B', C', E' réalisés suivant les exemples 1, et 6 à 8. La figure 6 montre la coupe d'un échantillon 51 de diamètre a 20mm formé de l'empilement d'une première couche 52 d'épaisseur b 0,5mm à laquelle adhère une deuxième couche 53 isolante d'épaisseur c 1mm selon la présente invention, et d'une troisième couche externe 54 d'épaisseur 0,5mm de composition identique à la première couche 52.

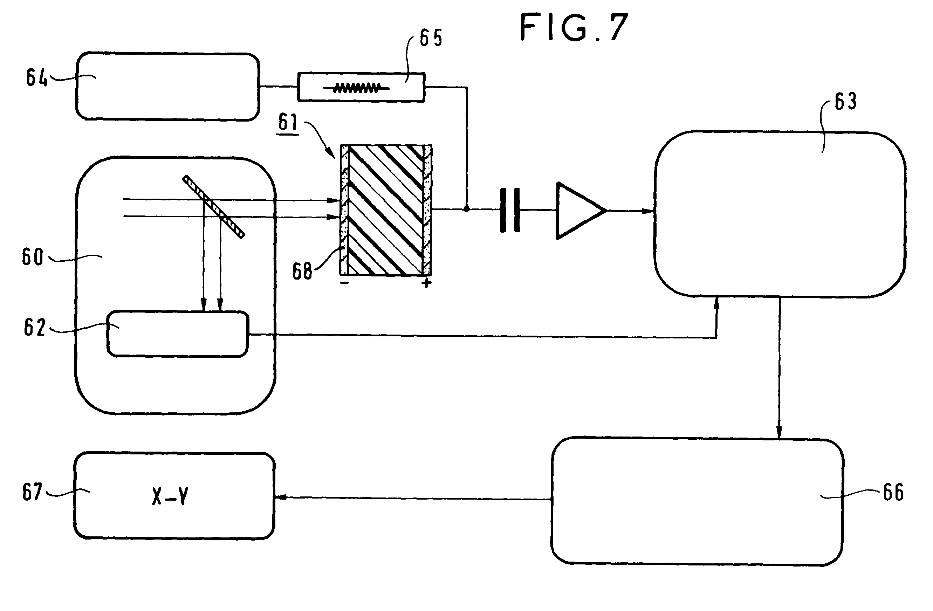

L'installation représentée sur la figure 7, se compose d'un laser 60 "YAg" dont le faisceau est envoyé sur une cible 61 correspondant à l'échantillon 51 dont chaque semi-conducteur constitue une électrode positive (+) et négative (-). Ce faisceau absorbé en surface de l'électrode négative 68 (-) décompose cette surface par pyrolyse, et les gaz émis provoquent une onde de pression qui traverse l'échantillon. Cette onde module les charges-images sur les électrodes et donne accès à la densité de charge volumique dans l'échantillon.

Une photodiode 62 permet de synchroniser un enregistreur 63 au laser 60. Le circuit est alimenté électriquement par une alimentation haute tension 64 munie d'une résistance 65. Les données enregistées sont transférées pour être traitées par un ordinateur 66 et sorties en fonction du temps sur un enregisteur graphique 67.

On soumet ces échantillons à un polarisation de 30kV/mm en courant continu, et on mesure le temps au bout duquel un renforcement de 50% du champ électrique peut être observé aux électrodes. La fréquence des observations est de 1 heure. Les temps relevés, en heures, sont donnés dans le tableau II ci-dessous:

**TABLEAU II**

| référence | A | B' | C' | E' |
|---|---|---|---|---|
| temps (h) | 1 | 1 | 20 | plus de 48 |

Ce test montre l'avantage des dispositifs C' et E' selon la présente invention pour la tenue de la jonction pendant la durée de son utilisation.

## Revendications

1. Dispositif pour la jonction de câbles d'énergie (2,3;22,23) à moyenne et haute tension comportant coaxialement à partir des âmes (13,20) des câbles au moins une première couche (7,27) entourée extérieurement par une deuxième couche (8,28) électriquement isolante en élastomère, caractérisé par le fait que ladite première couche (7,27) est constituée du mélange d'une matrice polymère et d'une charge qui est un polymère comportant au niveau des motifs monomères des fonctions susceptibles d'assurer une répartition homogène du champ électrique, ladite charge étant un polymère à groupements polaires pendants de constante diélectrique relative supérieure ou égale à 10, dont la proportion est choisie de telle sorte que la constante diélectrique relative dudit mélange soit supérieur ou égale à 6, ladite première couche (7,27) et ladite deuxième couche (8,28) étant étroitement associées avec une adhérence supérieure ou égale à 5N.cm⁻¹.

2. Dispositif selon la revendication 1, caractérisé par le fait que ladite charge est choisie parmi le caoutchouc nitrile, le caoutchouc nitrile hydrogéné, le polyéthylène chloré, le polyéthylène chlorosulfoné, et les mélanges contenant plus de 25% en poids desdits polymères.

3. Dispositif selon l'une des revendications précédentes, caractérisé par le fait que ladite matrice est choisie parmi un copolymère de l'éthylène, le polyéthylène linéaire très basse densité, et leurs mélanges.

4. Dispositif selon la revendication 3, caractérisé par le fait que ladite matrice est choisie parmi le terpolymère d'éthylène-propylène-diène à chaîne principale méthylène, le copolymère d'éthylène-propylène à chaîne principale méthylène, le copolymère d'éthylène et d'acétate de vinyl contenant au moins 26% d'acétate de vinyl, le copolymère d'éthylène et de butylacrylate, le copolymère d'éthylène et d'acrylate de méthyle, et leurs mélanges.

5. Dispositif selon l'une des revendications précédentes, caractérisé par le fait que ladite deuxième couche (8,28) est choisie parmi les élastomères thermoplastiques polyphasiques.

6. Dispositif selon la revendication 5, caractérisé par le fait que ladite deuxième couche (8,28) est choisie parmi les mélanges de terpolymère d'éthylène-propylène-diène à chaîne principale méthylène avec le polytéréphtalate d'éthylène, le polyamide, le polycarbonate, et le polypropylène.

7. Dispositif selon la revendication 5, caractérisé par le fait que ladite deuxième couche (8,28) est choisie parmi les mélanges du polyéthylène linéaire très basse densité avec le polytéréphtalate d'éthylène, le polyamide, le polycarbonate, et le polypropylène.

8. Dispositif selon l'une des revendications 1 à 4, caractérisé par le fait que ladite deuxième couche (8,28) est constituée d'un élastomère réticulé choisi parmi le terpolymère d'éthylène-propylène-diène à chaîne principale méthylène, le copolymère d'éthylène-propylène à chaîne principale méthylène, et le polyéthylène linéaire très basse densité, leurs alliages et leurs mélanges.

## Patentansprüche

1. Vorrichtung zur Verbindung von Starkstromkabeln (2, 3; 22, 23) für mittlere und hohe Spannung, die koaxial ausgehend von den Kabelseelen (13, 20) mindestens eine erste Schicht (7, 27) aufweisen, die außen von einer zweiten, elektrisch isolierenden Elastomerschicht (8, 28) umgeben ist, dadurch gekennzeichnet, daß die erste Schicht (7, 27) aus der Mischung aus einer Polymermatrix und einer Beigabe besteht, die ein Polymer ist, welches in Höhe der Monomermotive Funktionen enthält, die die homogene Verteilung des elektrischen Felds gewährleisten können, wobei die Beigabe aus einerseits einem Polymer mit hängenden polaren Gruppen ausgewählt wird, dessen relative Dielektrizitätskonstante εᵣ mindestens 10 beträgt und dessen Anteil so gewählt ist, daß die relative Dielektrizitätskonstante εᵣ dieser Mischung mindestens 6 beträgt, wobei die erste Schicht (7, 27) und die zweite Schicht (8, 28) eng miteinander verbunden sind und ihre Haftfestigkeit mindestens 5N·cm⁻¹ beträgt.

2. Vorrichtung nach Anspruch 1, dadurch gekennzeichnet, daß die Beigabe ausgewählt wird aus Nitrilkautschuk, hydriertem Nitrilkautschuk, chloriertem Polyäthylen, chlorsulfuriertem Polyäthylen und den Mischungen, die mehr als 25 Gew.% dieser Polymere enthalten.

3. Vorrichtung nach einem der vorhergehenden Ansprüche, dadurch gekennzeichnet, daß die Matrix ausgewählt wird aus einem Äthylen-Copolymer, dem linearen Polyäthylen sehr geringer Dichte und ihren Mischungen.

4. Vorrichtung nach Anspruch 3, dadurch gekennzeichnet, daß die Matrix aus dem Äthylenpropylendien-Terpolymer mit Methylen-Hauptkette, dem Äthylenpropylencopolymer mit Methylen-Hauptkette, dem Copolymer aus Äthylen und Vinylacetat, das mindestens 26% Vinylacetat enthält, dem Copolymer aus Äthylen und Butylacrylat, dem Copolymer aus Äthylen und Methylacrylat und ihrem Mischungen ausgewählt wird.

5. Vorrichtung nach einem der vorhergehenden Ansprüche, dadurch gekennzeichnet, daß die zweite Schicht (8, 28) aus den vielphasigen thermoplastischen Elastomeren ausgewählt wird.

6. Vorrichtung nach Anspruch 5, dadurch gekennzeichnet, daß die zweite Schicht (8, 28) aus den Mischungen des Äthylenpropyldien-Terpolymers mit Methylen-Hauptkette und aus Polyäthylenterephthalat, Polyamid, Polycarbonat und Polypropylen ausgewählt wird.

7. Vorrichtung nach Anspruch 5, dadurch gekennzeichnet, daß die zweite Schicht (8, 28) aus den Mischungen des linearen Polyäthylens sehr geringer Dichte mit Polyäthylenterephtalat, Polyamid, Polycarbonat und Polypropylen ausgewählt wird.

8. Vorrichtung nach einem der Ansprüche 1 bis 4, dadurch gekennzeichnet, daß die zweite Schicht (8, 28) aus einem vernetzten Elastomer besteht, das aus dem Äthylenpropylendien-Terpolymer mit Methylen-Hauptkette, dem Äthylenpropylen-Copolymer mit Methylen-Hauptkette und dem linearen Polyäthylen sehr geringer Dichte, ihren Legierungen und ihren Mischungen ausgewählt wird.

## Claims

1. A joint for a medium or high tension electrical cable (2, 3; 22, 23) comprising, coaxially from the cable core (13, 20), at least a first layer (7, 27) which is externally surrounded by a second layer (8, 28) that is elastomeric and electrically insulative, characterized in that said first layer (7, 27) is constituted by a mixture of a polymeric matrix and a filler constituted by a polymer comprising functions in its monomer units which can distribute the electric field homogeneously, said filler being selected from a polymer containing polar pendant groups with a relative dielectric constant greater than or equal to 10, the proportion being selected so that the dielectric constant of said mixture is greater than or equal to 6, said first and second layers (7, 27; 8, 28) being intimately associated with an adhesion greater than or equal to 5 N.cm⁻¹.

2. A joint according to claim 1, characterized in that said filler is selected from nitrile rubber, hydrogenated nitrile rubber, chlorinated polyethylene, chlorosulfonated polyethylene, and mixtures containing more than 25 % by weight of said polymers.

3. A joint according to claim 1 or claim 2, characterized in that said matrix is selected from an ethylene copolymer and very low density linear polyethylene, and mixtures thereof.

4. A joint according to claim 3, characterized in that said matrix is selected from ethylene-propylene-diene terpolymer with a methylene main chain, ethylene-propylene copolymer with a methylene main chain, ethylene-vinyl acetate copolymer containing at least 26 % of vinyl acetate, ethylene-butylacrylate copolymer, ethylene-methyl acrylate copolymer, and mixtures thereof.

5. A joint according to any one of the preceding claims, characterized in that said second layer (8, 28) is selected from the thermoplastic polyphase elastomers.

6. A joint according to claim 5, characterized in that said second layer (8, 28) is selected from mixtures of ethylene-propylene-diene terpolymer with a methylene main chain with poly(ethylene terephthalate), polyamide, polycarbonate and polypropylene.

7. A joint according to claim 5, characterized in that said second layer (8, 28) is selected from mixtures of very low density linear polyethylene with poly(ethylene terephthalate), polyamide, polycarbonate and polypropylene.

8. A joint according to any one of claims 1 to 4, characterized in that said second layer (8, 28) is constituted by a cross-linked elastomer selected from ethylene-propylene-diene terpolymer with a methylene main chain, ethylene-propylene copolymer with a methylene main chain, and very low density linear polyethylene, and alloys and mixtures thereof.
